# EUROPEAN PATENT APPLICATION

(11) **EP 0 747 751 A2**
(43) Date of publication of application: **11.12.1996**
(21) Application number: 96304102.5
(22) Date of filing: 05.06.1996
(51) Int. Cl.: G02F 1/135

(54) **Liquid crystal spatial light modulator**

(30) Priority: 09.06.1995 JP 143296/95; 25.04.1996 JP 105905/96
(71) Applicant: SEIKO INSTRUMENTS INC., Chiba-shi, Chiba 261 (JP)
(72) Inventor: Sekura, Rieko, c/o Seiko Instruments Inc., Chiba-shi, Chiba (JP); Kato, Naoki, c/o Seiko Instruments Inc., Chiba-shi, Chiba (JP); Iwaki, Tadao, c/o Seiko Instruments Inc., Chiba-shi, Chiba (JP)
(74) Representative: Sturt, Clifford Mark

(57) **Abstract**

To realize bright and high definition image with a liquid crystal spatial light modulator applied to a projective display unit or optical data processing by widening an application range and a possibility of the modulator by obtaining an output image having less noise and by forming fine pixels by forming the pixels by metal thin film when it is used in the projective display unit. In a liquid crystal spatial light modulator in which a photoconductive layer 103 and a dielectric multi-layered film layer 105 are provided on one electrode 102a between a pair of substrates 101a and 101b having electrodes 102a and 102b, films 106a and 106b for aligning liquid crystal molecules are formed on the both substrates so as to face with a certain gap to provide a liquid crystal layer 107 in the gap, an electrode layer 104 in which pixels are formed is formed between the photoconductive layer and the dielectric multi-layered film layer and the dielectric multi-layered film layer is formed so as to cover the electrode layer uniformly.

## Description

The present invention relates to an optically writing liquid crystal spatial light modulator applied to a projective display unit, an image processor, an optical data processing spatial light modulator or the like.

Conventionally, a spatial light modulator using liquid crystal is been used as a device for outputting input data in real-time while modulating its intensity or phase. However, because a photoconductive film is apt to cause diffusion of charge in the transverse direction and to degrade resolution, a method for correcting bleeding of an input image by forming a conductive reflecting film corresponding to pixels of an image to be written is being considered.

For a case in which pixels are input by spatially and digitally dividing them, there has been known an arrangement by which a reflecting layer made from a metal thin film is divided and arrayed in a matrix to digitally input an image to be written. Further, there has been shown a device structure in which metal reflecting films patterned and formed diagrammatically are superimposed alternately while interposing an insulating film therebetween and arrayed in a matrix in an article by Qi Hong Wu, Stephen H. Perlmutter, Robert A. Rice and Garret Model, "High-reflectivity Patterned Metal Mirror Used in an Optically Addressed Spatial Light Modulator", Opt. Eng., 33(3), pp. 946-950 (1994). While reading light is irradiated to grid-like gaps of the reflecting layer in the arrangement in which the metal reflecting film is divided and arranged in a matrix, the metal reflecting films may be arrayed having almost no gap in the arrangement in which they are superimposed alternately by interposing the insulating film therebetween.

However, because four corners of the divided reflecting film are cut so as not to contact each other and reading light is irradiated to the gap thereof, an image is destroyed or dot-like patterns which correspond to such gaps are always read out when an intense reading light is used, bringing about an output image having much noise from the gaps of the pixels. Although there has been a method of forming a light shading pattern which corresponds to the gaps of the divided reflecting layer to reduce the noise from the gaps of the pixels, there have been problems that it becomes difficult to form the shading pattern or to register the pixels when the gap is very small and the pixel is very thin and that at the same time, it is difficult to pattern it practically because a thick shading film must be formed in order to obtain a high shading characteristic.

When A1 is used as a material of the reflecting film and when a thickness of the A1 film is increased to obtain a high reflectivity because a high enough reflectivity cannot be obtained only by A1 pixels due to absorption of the Al film, a surface condition becomes worse and it becomes difficult to align the liquid crystal uniformly. Further, there has been a problem that because an insulating film is formed on the lower A1 layer, a difference of reflectivity is brought about between it and the upper A1 layer.

Still more, because an image which has been originally analog spatially is spatially and divisionally formed by thus forming the conductive pixels in the case when the liquid crystal spatial light modulator is used for the purpose of analog spatial modulation, a high spatial frequency component is generated, causing a degradation of S/N, when a hologram or the like is recorded or reproduced to or from the pertinent liquid crystal spatial light modulator, for example.

This invention provides a liquid crystal spatial light modulator comprising: a light writing means; a light reading means; a voltage applying means; and a reflection type liquid crystal device including a transparent electrode layer provided on one side of a reading side transparent substrate, a transparent electrode layer and a photoconductive layer provided by laminating one by one on one side of a writing side substrate which faces thereto, and alignment films for aligning liquid crystal molecules formed on the both substrates so as to face each other with a certain gap and having liquid crystal material in the gap, and characterised by further comprising an electrode layer separately formed in the form of pixels electrically insulated from each other on said photoconductive layer and a dielectric multi-layered film layer formed so as to cover said electrode layer separately formed in the form of pixels.

Thus, in order to solve the aforementioned problems, according to the present invention, an electrode layer made from a metal thin film separately formed in the form of pixels is formed on a photoconductive layer laminated on a writing side substrate and a dielectric multi-layered film layer is formed so as to cover the electrodes divided into pixels uniformly in a liquid crystal spatial light modulator using liquid crystal. Thereby, a structure which allows the gaps between the pixels to be completely shaded can be made up without using a complicated process and the aforementioned problems can be solved.

Further, because the above-mentioned structure can be realized with a simple process, the electrode layer separately formed in the form of pixels between the photoconductive layer and the dielectric multi-layered film layer may be readily constructed so that one side of the pixel and a typical length of the gap between the pixels are about equal to or less than a critical resolution of the liquid crystal spatial light modulator, thus allowing the problem that an analog image is digitized to be solved.

By adopting the inventive structure and by forming the dielectric multi-layered film layer uniformly on the electrode layer divided into pixels (hereinafter referred to as pixel electrodes) in the spatial light modulator using liquid crystal, the gaps between the pixels may be shaded. Thus, the crush of an input image can be eliminated and the application range and possibility of the spatial light modulator can be widened. Further, because the electrode layer requires no high reflectivity, it may have a thickness of several hundred angstroms. Then, an irregularity of the surface may be suppressed considerably by forming the dielectric multilayered film layer which is a reflecting film so as to cover it and defective alignment of the liquid crystal in fabricating the device may be reduced.

An operation of the inventive liquid crystal spatial light modulator is the same with a conventional liquid crystal spatial light modulator. At first, it is put in a state in which a driving voltage is applied between the transparent electrode layers. This driving voltage differs depending on a mode of liquid crystal to be used. For example, a DC bias voltage in which AC component is superimposed is used when the liquid crystal is nematic liquid crystal and a bipolar pulse voltage having various waveforms is used for a ferro-electric liquid crystal. At this time, it is assumed that in a state no light is irradiated to the photoconductive layer, the liquid crystal is set so as not to cause any operation because the driving voltage divided to the liquid crystal layer is in a level insufficient to excite liquid crystal molecules, i.e., a level less than a threshold voltage for operating the liquid crystal, because the photoconductive layer is in a high resistance state. Next, when light is irradiated to the photoconductive layer, a resistance value of part of the photoconductive layer to which the light is irradiated is lowered by about 3 to 5 digits, or orders of magnitude, as compared to part to which no light is irradiated, so that a rate of the driving voltage divided into the liquid crystal layer increases and when it exceeds the threshold voltage of the liquid crystal, the liquid crystal is excited and is operated. Accordingly, when the light irradiated to the photoconductive layer has a distribution of intensity having a pattern corresponding to an image, liquid crystal having a distribution corresponding thereto operates and when reading light is irradiated from the reading substrate side, a pattern corresponding to the distribution of operation of this liquid crystal is read.

Because almost no alignment of the liquid crystal molecules is disturbed when the photoconductive layer is formed as described above in the inventive liquid crystal spatial light modulator and the liquid crystal molecules in the gap of the pixel electrodes where no writing light is irradiated are not operated and are arrayed orderly, no reading light is reflected therefrom and thus noise is reduced.

Further, because the pixels are formed by the metal thin film, they may be finely processed by etching relatively readily. Still more, because no pixel registration is necessary in forming the film, it becomes possible to fabricate a spatial light modulator having fine pixels and to realize a projector which can project bright and high definition images.

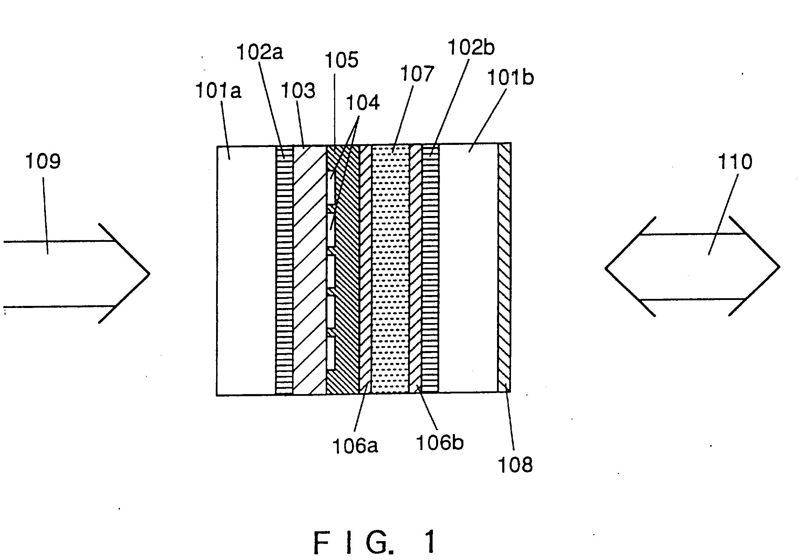

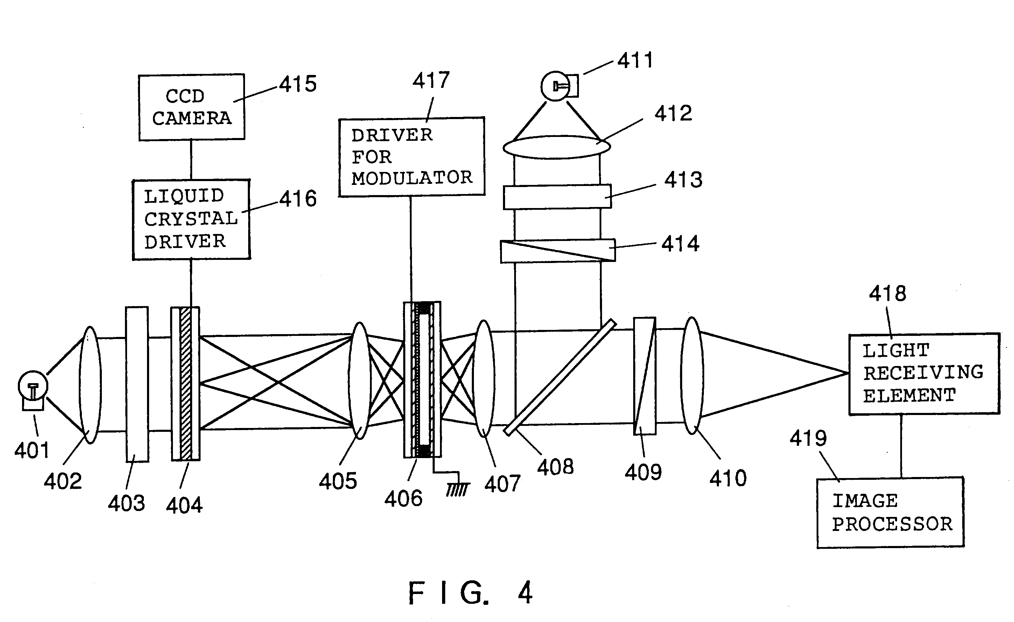

FIG. 4 shows an example of a writing and reading optical system using the inventive liquid crystal spatial light modulator. Writing light output from a writing light source 401 is irradiated to a liquid crystal TV 404 through a lens 402 and an interference filter 403 to image and display image data displayed on the liquid crystal TV 404 to a writing plane of an inventive liquid crystal spatial light modulator 406. It is noted that the liquid crystal spatial light modulator 406 is driven by the driving voltage described above output from a driver 417 for modulator 406. That is, this driving voltage differs depending on a mode of liquid crystal to be used. For example, a DC bias voltage in which an AC component is superimposed is used for nematic liquid crystal and a bipolar pulse voltage having various waveforms is output for ferroelectric liquid crystal. Reading light output from a reading light source 411 is irradiated to a reading plane of the liquid crystal spatial light modulator 406 via an image-forming lens 407 after being directed through a lens 412, an interference filter 413 and a polarizer 414 and reflected by a beam splitter 408. Then, data reflected on the surface of the dielectric multi-layered film layer by the reading light and taken into a light receiving element 418 such as a CCD via an analyzer 409 and a lens 410 is processed by an image processor 419. It is needless to say that the image processing means may be software on a computer, electrical signal processing means or optical image processing means. At this time, when the polarizer 414 for linearly polarizing the reading light and the analyzer 409 for analyzing the reflected light modulated by the liquid crystal layer are set in a crossed Nicol state and white light is used for the reading light, the liquid crystal spatial light modulator 406 is disposed so that a bright field is brought about under the crossed Nicol state in a state in which a maximum modulation is obtained when a voltage applied to the spatial light modulator in FIG. 1 is increased gradually. The image data to be input may be read optically and input to form an image after inputting an image taken in once by a CCD camera 415 to an electrical writing liquid crystal device such as the liquid crystal TV 404 via a liquid crystal driver 416 like the present embodiment or the image may be displayed on the liquid crystal TV 404 by converting image data within a memory of a computer from digital to analog once via an image board or the like and by inputting it to the liquid crystal driver 416.

Embodiments of the invention will now be described, by way of example only, with reference to the accompanying diagrammatic figures, in which:
FIG. 1 shows a structure of an inventive liquid crystal spatial light modulator;
FIG. 2 shows a structural example in which Al is used as a material of pixel electrodes in the inventive liquid crystal spatial light modulator;
FIG. 3 shows an example in which a dielectric multilayered film layer is composed of a light shading layer and a mirror layer in the inventive liquid crystal spatial light modulator;
FIG. 4 shows an example of a writing and reading optical system using the inventive liquid crystal spatial light modulator; and
FIG. 5 shows an example of a projective display unit using the inventive liquid crystal spatial light modulator.

Contents of the present invention will be explained below in detail by using the drawings.

### First Embodiment

FIG. 1 shows a structure of an inventive liquid crystal spatial light modulator.

As substrates 101a and 101b for pinching liquid crystal molecules, transparent glass substrates having 5 mm of thickness whose both ends are polished to λ/5 or less of parallel flatness in a wavelength of a He-Ne laser are used. Indium Tin Oxide (ITO) transparent electrode layers 102a and 102b are provided on the surface of both substrates and an anti-reflection film 108 is formed on the side of a reading light irradiating plane of the reading side substrate. An intrinsic hydroamorphous silicon photoconductive layer 103 having 3.5 µm of thickness is formed on the optically writing side electrode layer 102a. Here, the photoconductive layer 103 may have a film composition to which P or B is added or may have a structure in which a semiconductor film having another n-type or p-type composition is laminated on an a-Si: H layer.

After forming 400 angstrom of Cr film on the photoconductive layer 103 by sputtering, Cr pixel electrodes 104 are formed by etching Then, a dielectric multi-layered film layer 105 is formed so as to cover the Cr pixel electrodes uniformly. Although Cr is used as a material of the pixel electrodes in the present embodiment, it may be a material such as Al which can be formed into relatively uniform thin film and which can be readily etched. Further, after applying polyimide as an agent of vertical aligning treatment on the surface of the both substrates, a very weak rubbing treatment is implemented. Then, alignment film layers 106a and 106b are provided so that the rubbing directions on the writing and reading sides substrates become opposite from each other in the combined state. This alignment film may be one which an oxide such as silicon monoxide is evaporated obliquely or may be one-side rubbing in which only one of the reading side or the writing side substrate is rubbed or a combination of the obliquely evaporated film and an organic alignment film. It is noted that there is no problem even if another material such as cadmium sulfide is used for the photoconductive layer 103. An optimum value of the thickness thereof fluctuates depending on a thickness of the dielectric multi-layered film layer 105 and the liquid crystal layer 107. It is set after consideration of electrical characteristics and thickness of each film described above within a range of 1 to 9 µm. The dielectric multilayered film layer 105 is designed to reflect more than 90 % of a wavelength range of the reading light.

Next, silica balls having 3 µm of average grain size are mixed and dispersed in a peripheral sealing material. Then, after applying and patterning the sealing material by using a dispenser, the two substrates are bonded to create a gap for pinching nematic liquid and liquid crystal is transferred to the gap by using vacuum transfer to create the liquid crystal layer 107.

According to the liquid crystal spatial light modulator constructed as described above, optical data can be written to the liquid crystal layer 107 by writing light 109 from the outside of the plane and the written optical data may be read by the polarizing optical system. Further, in order to improve an efficiency of utilization of the reading light 110 from the outside of the plane, the anti-reflection film 108 made from a mono-layer film having a low refractive index or a dielectric multi-layered film in which films having a low refractive index and films having a high refractive index are formed alternately is provided on the surface of the transparent glass substrate 101b in the present embodiment.

### Second Embodiment

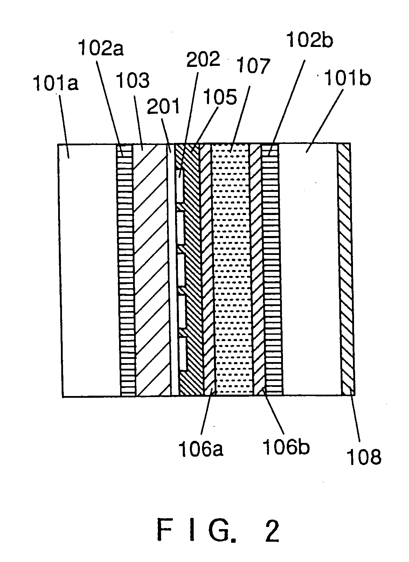

FIG. 2 shows a spatial light modulator constructed by using A1 as a material of the pixel electrodes in the liquid crystal spatial light modulator having the structure shown in the first embodiment. Because its structure is the same as that described in the first embodiment except of the pixel electrodes, the same reference numerals are used to designate the components having the same function as those shown in FIG. 1 and an explanation thereof will be omitted here to avoid duplication. When an A1 film is to be formed on the a-Si:H film by sputtering, an SiO₂ layer 201 having 1000Å of thickness is formed as a passivation layer between the photoconductive layer 103 and the Al pixel electrode 202 in order to prevent A1-Si which has a large conductivity and is difficult to remove by etching from being formed. Thereby, it allows the problem that A1-Si cannot be removed by etching and is left, thus causing a short-circuit between pixel electrodes to be solved. It is needless to say that other than SiO₂ any film having an excellent insulating quality, e.g. Ta₂O₅, AlN, Si₃N₄ and Al₂O₃, may be used for the passivation film.

### Third Embodiment

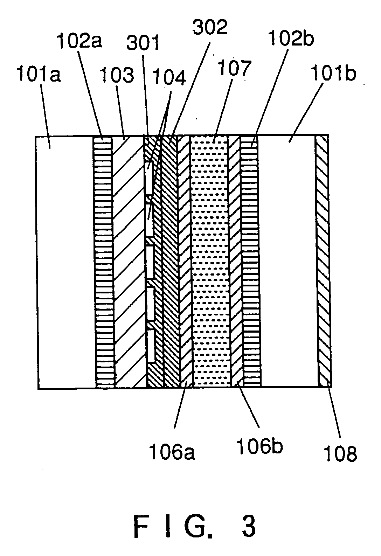

FIG. 3 shows a spatial light modulator in which the dielectric multi-layered film layer is composed of a light shading layer and a mirror layer in the inventive liquid crystal spatial light modulator. Because its structure is the same as that described in the first embodiment except of the dielectric multi-layered film layer, the same reference numerals are used to designate the components having the same function as those shown in FIG. 1 and an explanation thereof will be omitted here to avoid duplication. The shading layer 301 is formed so as to cover the Cr pixel electrodes 104 and the mirror layer 302 is formed thereon. The shading layer is an interference absorbing film of [Si/SiO₂] system and the mirror layer is composed of [TiO₂/SiO₂] system. Because light transmitted through the mirror layer may be absorbed by the shading layer by providing the shading layer as described above, no light leaks to the photoconductive layer 103, thus allowing a high output reading light source to be used.

### Fourth Embodiment

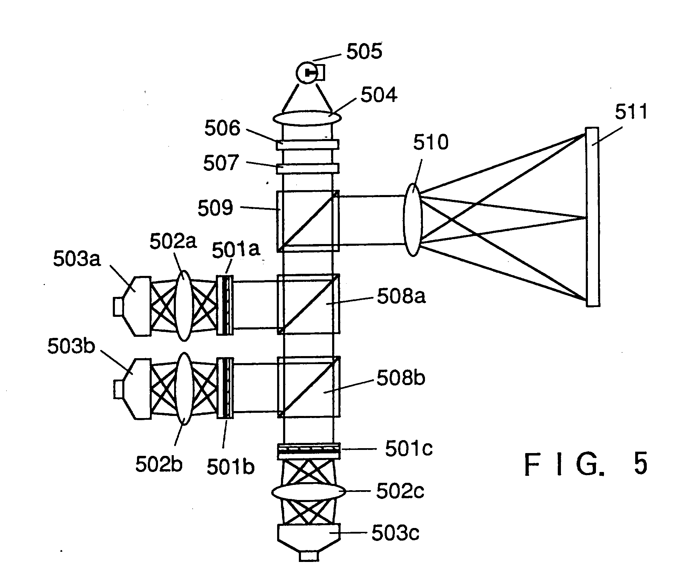

FIG. 5 shows one embodiment of a projective display unit using the inventive liquid crystal spatial light modulator.

In the present embodiment, three sets of liquid crystal spatial light modulators 501a, 501b and 501c are used as image forming means. Writing to each of them is carried out by using black-and-white CRTs 503a, 503b and 503c for separately displaying images of three colors of red (R), green (G) and blue (B) and image-forming lenses 502a, 502b and 502c respectively. Formed images are combined and projected on a screen 511 by a projecting optical system having a light source 505 using a xenon lamp and a lens 504, an ultraviolet absorbing filter 506, an infrared absorbing filter 507, dichroic mirrors 508a (reflects R and transmits G and B) and 508b (reflects B and transmits G), a polarized beam splitter 509 and a projection lens 510.

The inventive projective display unit realizes a bright and sharp read image by using the liquid crystal spatial light modulators having the electrode layer in which pixels which correspond to pixels of the CRT are formed between the photoconductive layer and the dielectric multi-layered film layer, respectively, as the image forming means. A reflecting wavelength band of the dielectric multi-layered film layer is changed for each spatial light modulator for R, G and B. The reflecting wavelength band of the dielectric multi-layered film layer is 580 to 710 nm for R (501a), 500 to 600 nm for G (501b) and 420 to 500 nm for B (501c). It is designed to obtain more than 95 % of reflectivity. More than 95 % of reflectivity could be obtained within a wavelength range of 560 to 780 nm for R, 480 to 650 nm for G and 390 to 520 nm for B in the dielectric multi-layered film layer of each color used in the present embodiment.

### Sixth Embodiment

One embodiment in which the inventive liquid crystal spatial light modulator is used in a writing and reading optical system shown in FIG. 4 will be explained below. The basic structure of the liquid crystal spatial light modulator used in the present embodiment is the same as that described in the second embodiment. Because a liquid crystal TV 404 is used as writing means in the present embodiment, a written image itself is formed by pixels. When it is written to an inventive liquid crystal spatial light modulator 406 in which pixels are formed, a periodic pattern similar to a moire pattern is formed sometimes unless pitches of the pixels of each are in a relationship of integer times and they correspond each other accurately in an image-forming relationship of one-to-one. When liquid crystal spatial light modulators in which the pixel size of the pixel electrode and the distance of the gap between the pixels are changed in various ways were fabricated for the purpose of preventing above-mentioned pattern and when images obtained as a result were evaluated by naked eyes, a result as shown in Table 1 was obtained. It is noted that the pixel of the inventive liquid crystal spatial light modulator is square and a projective magnification factor of a writing lens is set so that the pixel of the liquid crystal TV 404 can be written with a size of 20 µm x 60 µm. Then, it was discriminated whether there exists a moire pattern or not only in the direction of 20 µm of the pixel of the liquid crystal TV 404. Further, a critical resolution of interference fringes writable/readable from a liquid crystal spatial light modulator fabricated in the same structure and by the same method as the liquid crystal spatial light modulator used at this time except that there exists no pixel electrode was found to be 6.25 µm. As can be seen from this result, it was found that no moire pattern is generated in the application of the present embodiment by setting a length of one side of the pixel electrode and a distance between the pixel electrodes of the inventive liquid crystal spatial light modulator to be approximately equal to or less than the critical resolution. When a read image obtained this time was projected and observed by magnifying by 100 times, it was found that an image in which the pixels are smooth to the degree discernible by naked eyes was formed.

**[Table 1]**

| | Size of Pixel: 20 µm | Size of Pixel: 8 µm | Size of Pixel: 5 µm |
|---|---|---|---|
| Gap: 9 µm | moire exists | moire exists | moire exists |
| | | | more or less |
| Gap: 6 µm | moire exists | moire exists | no moire |
| | | more or less | |
| Gap: 3 µm | moire exists | moire exists | no moire |
| | | more or less | |

As described above, the use of the inventive liquid crystal spatial light modulator allowed the high resolution and high contrast projective display unit to be realized and a possibility in using in optical data processing to be widened because an output image having less noise is obtained.

Further, because a smooth image similar to liquid crystal spatial light modulation in which no pixel is formed is obtained while forming the pixels, the present invention has an effect that it can realize an application not only to digital optical data processing but also analog optical data processing using holograms and to an image projector which can output smooth images.

This invention provides a liquid crystal spatial light modulator comprising: a light writing means; a light reading means; a voltage applying means; and a reflection type liquid crystal device including a transparent electrode layer provided on one side of a reading side transparent substrate, a conductive electrode layer, a photoconductive layer and a dielectric multi-layered film layer provided by laminating one by one on one side of a writing side substrate which faces thereto, and alignment films for aligning liquid crystal molecules formed on the both substrates so as to face with a certain gap to fill liquid crystal in the gap, wherein an electrode layer is separately formed in the form of pixels electrically insulating from each other between said photoconductive layer and said dielectric multi-layered film layer and said dielectric multi-layered film layer is formed so as to cover said separately formed electrode layer.

The aforegoing description has been given by way of example only and it will be appreciated by a person skilled in the art that modifications can be made without departing from the scope of the present invention.

## Claims

1. A liquid crystal spatial light modulator comprising: a light writing means (109); a light reading means (110); a voltage applying means; and a reflection type liquid crystal device including a transparent electrode layer (102b) provided on one side of a reading side transparent substrate (101b), a transparent electrode layer (102a) and a photoconductive layer (103) provided by laminating one by one on one side of a writing side substrate (101a) which faces thereto, and alignment films (106a, 106b) for aligning liquid crystal molecules formed on the both substrates so as to face each other with a certain gap and having liquid crystal material (107) in the gap, and characterised by further comprising an electrode layer (104) separately formed in the form of pixels electrically insulated from each other on said photoconductive layer and a dielectric multi-layered film layer (105) formed so as to cover said electrode layer separately formed in the form of pixels.

2. The liquid crystal spatial light modulator according to Claim 1, further characterized in that said electrode layer separately formed in the form of pixels between said photoconductive layer and said dielectric multi-layered film layer is made from a metal thin film.

3. The liquid crystal spatial light modulator according to Claim 1 or Claim 2, further characterized in that a passivation layer (201) made from an insulating material is formed between said electrode layer separately formed in the form of pixels and said photoconductive layer.

4. The liquid crystal spatial light modulator according to any preceding Claim, further characterized in that said photoconductive layer is a hydro-amorphous silicon layer.

5. The liquid crystal spatial light modulator according to any preceding Claim, further characterized in that said dielectric multilayered film layer is composed of a light shading layer (301) and a reflecting layer (302).

6. The liquid crystal spatial light modulator according to any preceding Claim, further characterized in that one side length of each pixel and a maximum length of a gap between the pixels of said electrode layer formed separately in the form of pixels between said photoconductive layer and said dielectric multi-layered film layer is about the same as or less than a critical resolution of said liquid crystal spatial light modulator.
